# EUROPEAN PATENT APPLICATION

(11) **EP 1 580 927 A1**
(43) Date of publication of application: **28.09.2005**
(21) Application number: 03812548.0
(22) Date of filing: 19.08.2003
(51) Int. Cl.: H04L 12/14

(54) **WLAN SERVICE SYSTEM AND METHOD FOR CHARGING BASED ON USER DATA FLOW**

(30) Priority: 07.12.2002 CN 02154700
(71) Applicant: Huawei Technologies Co., Ltd., Shenzhen City, Guangdong 518057 (CN)
(72) Inventor: ZHANG, Wenlin, Shenzhen, Guangdong 518057 (CN)
(74) Representative: Mounteney, Simon James
(86) International application number: PCT/CN2003/000692
(87) International publication number: WO 2004/054170

(57) **Abstract**

A WLAN service system for charging based on the user data flow, wherein the system includes: a WLAN user equipment, a WLAN access network, a Packet Data Gateway and a charging service unit that generates charging information and is connected with the Packet Data Gateway; the invention also discloses a charging method based on the user data flow, and in this method a Packet Data Gateway takes statistic for the current user data flow to obtain original data flow information that is then transmitted to the charging service unit; having received the original charging related information, the charging service unit generates charging information that is then transferred to a charging system. With this system and method, packet data passing through the Packet Data Gateway can be charged based on the data flow.

## Description

### Field of the Technology

The invention relates generally to telecommunication charging, more especially to a WALN service system for charging based on user data flow in a WLAN (Wireless Local Area Network) access network and a charging method thereof.

### Background of the Invention

Since wireless access rates required by subscribers are getting more and more higher, WLANs are created to provide wireless access with high rate in a local scope. WLANs adopt various techniques, more popular one is IEEE 802.11b standard that adopts 2.4GHz frequency band. The 2.4GHz frequency band which is also applied by the Bluetooth, while the 5GHz frequency band is adopted by others techniques, such as the IEEE 802.11a and ETSI BRAN Hiperlan2.

Although there are different wireless access techniques, most WLANs are used to transmit IP packet data. For a wireless IP network, a WLAN access network is transparent for upper IP layers. Basic structure of the WLAN access network comprises an Access Point (AP) used to wireless access for user equipment, and a network controller connected to the AP, which constitute an IP transmission network.

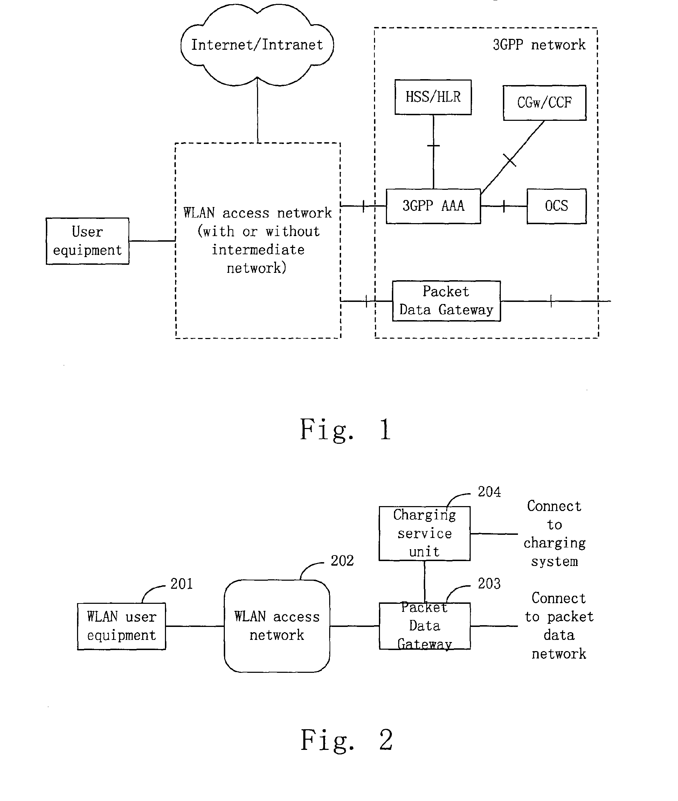

Along with the rise and development of WLAN techniques, interworking between WLANs and various wireless mobile telecommunication networks, such as GSM, CDMA system, WCDMA system, TD-SCDMA system and CDMA 2000 system, has become research focus points. A simplified architecture of 3GPP-WLAN interworking defined by 3GPP is shown in Figure 1. Through a WLAN access network, user equipments may connect to an Internet or an Intranet, and also to a 3GPP home network. The 3GPP home network mainly includes a Home Subscriber Server (HSS)/Home Location Register (HLR), an Authentication, Authorization and Accounting (AAA) server, a Charging Gateway (CGw)/Charging Collection Function (CCF), an Online Charging System (OCS) and a Packet Data Gateway.

As shown in Figure 1, the user equipment, the WLAN access network, the 3GPP AAA server, the Packet Data Gateway and the charging system constitute the 3GPP-WLAN interworking, which can be served as a WLAN service system. The 3GPP AAA server is responsible for authentication, authorization and accounting of subscriber, and it is also responsible for collection and transmission charging information from the WLAN access network to the charging system. The Packet Data Gateway is responsible for transmitting the user data from the WLAN access network to the 3GPP network or other packet networks. The charging system receives and records user charging information; in addition, the OCS instructs networks to periodically transmit online accounting information based on the accounting state of online charging users. The charging system controls user equipments to connect with WLANs or not based on the accounting information and executes statistic function for the charging information.

In the present charging methods, the charging information, for example the telephone tariff, is generated and transformed in the service network, and then transmitted to the CGw or the CCF to perform the charging. The charging method based on a user-paying mode is implemented in two ways: the offline charging and the online charging. For the offline charging, the user payment is settled after the user has disconnected from the system each time based on the charging information. For the online charging, the user prepays a certain amount of money, and the OCS informs the network the available charging permission value for the current call based on the balance of the prepaid money. For example, suppose each call is permitted to take 15 minutes long, and when the time limit is going to reach, the network will applies for another time limit from the OCS; if it is successful, the session will be continued until the user hands off, and the charging information is sent to the OCS so as to make the charging; at the same time, the charging information may be sent to CGw/CCF so as to form a detailed telephone tariff. If the balance of prepaid money is used up before hand-off, the OCS will inform the network to end the current user service. In the above charging information, a time unit is generally taken as a measurement unit, but the user data flow unit can be also taken as the measurement unit in packet data networks.

Nevertheless, in the present 3GPP-WLAN system, there is no charging method that takes the user data flow for measurement. Although the Packet Data Gateway can transmit the user data to the 3GPP network or other packet data networks, there is no interaction of charging information between the Packet Data Gateway and the 3GPP AAA server, so charging based on the user packet data flow of the Packet Data Gateway cannot be implemented.

### Summary of the Invention

One objective of the invention is to provide a WLAN service system that implements the charging based on the user data flow passing through the Packet Data Gateway.

Another objective of the invention is to provide a charging method based on the user data flow passing through the Packet Data Gateway in the WLAN service system.

The above objective is implemented by the following technical scheme.
A wireless local area network (WLAN) service system for charging based on user data flow, including a WLAN user equipment, a WLAN access network, and a Packet Data Gateway, wherein further comprises a charging service unit which generates charging information for user packet data, being connected with the Packet Data Gateway.

Wherein the charging service unit is connected with a Charging Gateway (CGw)/Charging Collection Function (CCF) entity and an Online Charging System, respectively. The charging service unit can be an independent entity or a functional module in a network entity. The charging service unit may be a charging functional module in a 3GPP AAA server. The charging service unit may also be a functional module in the Packet Data Gateway.

A charging method based on a WLAN service system comprises,
a. a Packet Data Gateway taking statistic for a current user data flow to obtain original data flow information, then transmitting to a charging service unit;
b. having received the original data flow information, based on it the charging service unit generating charging information, then transmitting the charging information to a charging system.

The method further comprises, the charging service unit transmitting the generated charging information to a Charging Gateway (CGw)/Charging Collection Function (CCF) entity or to an Online Charging System.

Wherein Step a comprises, the Packet Data Gateway transmits original data flow information of each user to the charging service unit; or sends one or more than one original data flow information classified by data content to the charging service unit.

Wherein step of generating charging information in Step b comprises, the charging service unit taking the original data flow information as the charging information directly, or analyzing and taking statistic for the original data flow information, and then taking the analyzed and statistic result as the charging information. The step of analyzing and taking statistic for the original data flow information comprises, the charging service unit classifying the original data flow information based on different users, different Packet Data Gateways, different contents or any combination of them, and then taking statistic for the classified data flow information to generate different kinds of charging information.

A DIAMETER or a RADUS protocol is complied with between the packet data gateway and the charging service unit to interact.

It is seen that the invention provides a charging method and system based on the user data flow: the Packet Data Gateway obtains the statistical data flow information and sends to the charging service unit to transform, analyze and calculate in order to generate the charging information, which is then sent to the charging system for offline charging or online charging. New charging information is added in the WLAN; thereby a new charging method is performed based on the new charging information. For those services that directly provides data resources for user based on user data flow, it is more convenience to provide services and charging. The invention is implemented on the present network structure, so it is easy to implement and no impacts on the present network functions happen.

### Brief Description of the Drawings

Figure 1 shows a structure of the 3GPP-WLAN interworking.
Figure 2 shows a structure of the WLAN service system of the invention.
Figure 3 shows a charging procedure of the invention according to the offline charging mechanism.
Figure 4 shows a charging procedure of the invention according to the online charging mechanism.
Figure 5 shows a structure of the WLAN service system of a embodiment.
Figure 6 shows a structure of the WLAN service system of another embodiment.

### Embodiments of the Invention

The invention will be described in more detail with reference to drawings and embodiments.

The charging system for charging based on user packet data flow in the WLAN access network is shown in Figure 2. The system mainly includes: WLAN user equipment 201, WLAN access network 202, Packet Data Gateway 203 and charging service unit 204. Wherein Packet Data Gateway 203 takes statistic for the packet data flow of the current user, and sends the statistical result to the charging service unit 204 for processing. The charging service unit can be an independent entity or a functional module in an entity. For instance, a charging functional module in the 3GPP AAA server may act as the charging service unit, or the charging service unit may be a functional module in the Packet Data Gateway 203. When Packet Data Gateway 203 and the charging service unit 204 are located in different entities, both can be connected directly or through an intermediate unit or an equipment. Connection between Packet Data Gateway 203 and the charging service unit 204 is based on the RADUS protocol and the DIAMETER protocol.

Based on the system structure shown in Figure 2, the charging information of the invention is generated in the following steps:
1) When the WLAN user equipment communicates with the 3GPP network through the WLAN access network, the user packet data are transmitted through the Packet Data Gateway; the Packet Data Gateway takes statistic for the current user data flow to obtain the original data flow information and then sends the original data flow information to the charging service unit. There are various ways to take statistic, such as based on the classified data content etc.
2) Having received the original charging information, the charging service unit generates charging information related to the data flow after the original dada flow information is directly applied or has been transformed, analyzed and calculated, and then the generated charging information is transmitted to the charging system, such as the OCS for online charging and the CGw/CCF for offline charging etc., to complete the charging.

In Step 2, step of the original charging information being transformed, analyzed and calculated is as follows: when there are more than one Packet Data Gateway, the charging service unit needs to take statistic for all the packet data flows based on different users, different Packet Data Gateways, different data contents or different data sources. Said charging information may be the user data flow directly or after the transformation.

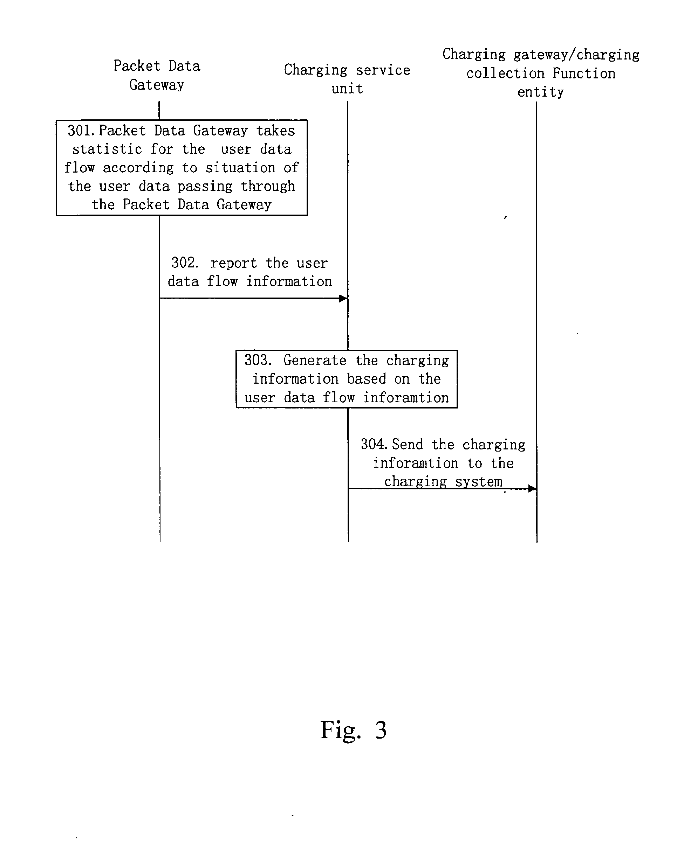

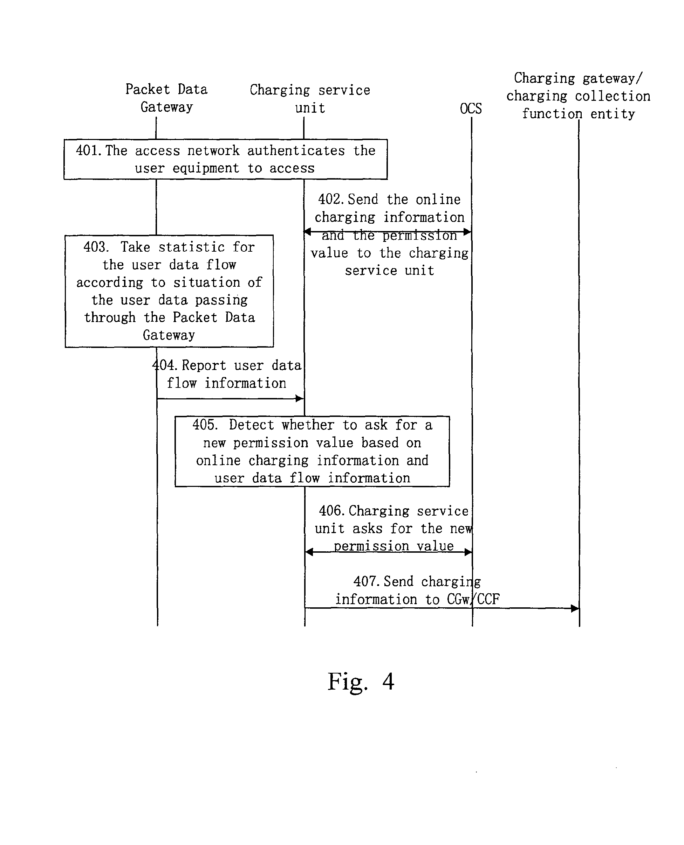

Figure 3 and 4 show the offline charging flowchart and online charging flowchart based on the WLAN service system of the invention, respectively. Figure 3 includes the following steps:
Steps 301~302, When user data is passing through the Packet Data Gateway, the Packet Data Gateway takes statistic for the user data flow, and then reports the statistical user data flow to the charging service unit, which may return to the Packet Data Gateway an acknowledgement.
Steps 303~304, Having received the statistical user data flow, the charging service unit records it, and then takes statistic based on different classification etc., to generate the charging information, which is then sent to the CGw/CCF for offline charging.

As shown in Figure 4, flowchart for online charging includes the following steps:
Step 401, first, the access network authenticates the user equipment to connect to the network, so the user is online.
Step 402, During communication, the Online Charging System informs the charging service unit to be ready for the user real-time charging; namely, the Online Charging System sends the charging service unit online charging information and a charging permission value for the user communication based on the user prepaid condition.
Steps 403~404, When the user data is passing through the Packet Data Gateway, the Packet Data Gateway takes statistic for the user data flow, and then reports the statistical user data flow to the charging service unit that may return to the Packet Data Gateway an acknowledgement; the reporting moment can be at the end of a session/data transmission service operation or may be done periodically during data transmission; the periodical value can be a predefined time interval, or a moment when an predefined amount of the data flow is reached.
Steps 405~406, Having received the statistical user packet data flow, the charging service unit records it and detects whether to require a new charging permission value according to the online charging information; if it is, the charging service unit will ask the Online Charging System the new charging permission value, otherwise go on taking statistic and detection; thereby the online charging based on the user data flow is performed. When the charging service unit has requested the new charging permission value, if the user has no enough prepaid money in the Online Charging System, no more new charging permission values will be delivered to the charging service unit, which will then inform that the current connection is end.
Step 407, the charging service unit will send the CGw/CCF all charging information related to the user data flow for storing in order that the charging information can be interrogated offline later.

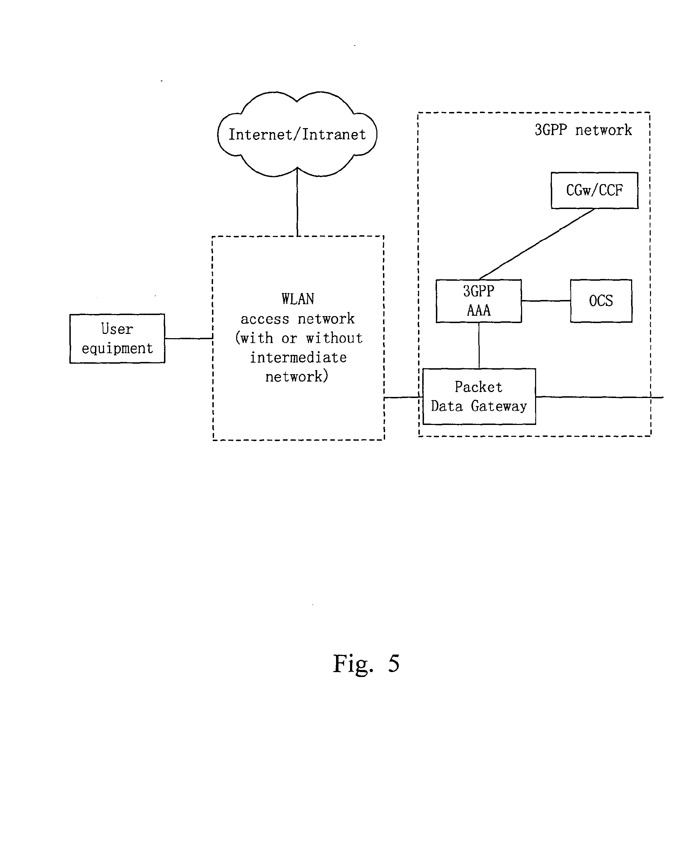

Function of the charging service unit may be performed by the 3GPP AAA server, i.e. a charging functional module in the 3GPP AAA server may act as the charging service unit of the invention. As shown in Figure 5, there is a connection based on the DIAMETER or the RADIUS protocol between the Packet Data Gateway and the 3GPP AAA server, in order to transmit the user data flow information. In this case, the Packet Data Gateway transmits the user data flow information to the 3GPP AAA server, and the 3GPP AAA server transforms, analyzes and takes statistic to generate the charging information, which is then transmitted to the charging system that comprises the CGw/CCF and the OCS. The charging information is periodically sent to the OCS during the charging procedure in case of the online charging.

Based on the structure shown in Figure 5, the charging procedure is the same as Figure 3 for offline charging and Figure 4 for online charging, respectively.

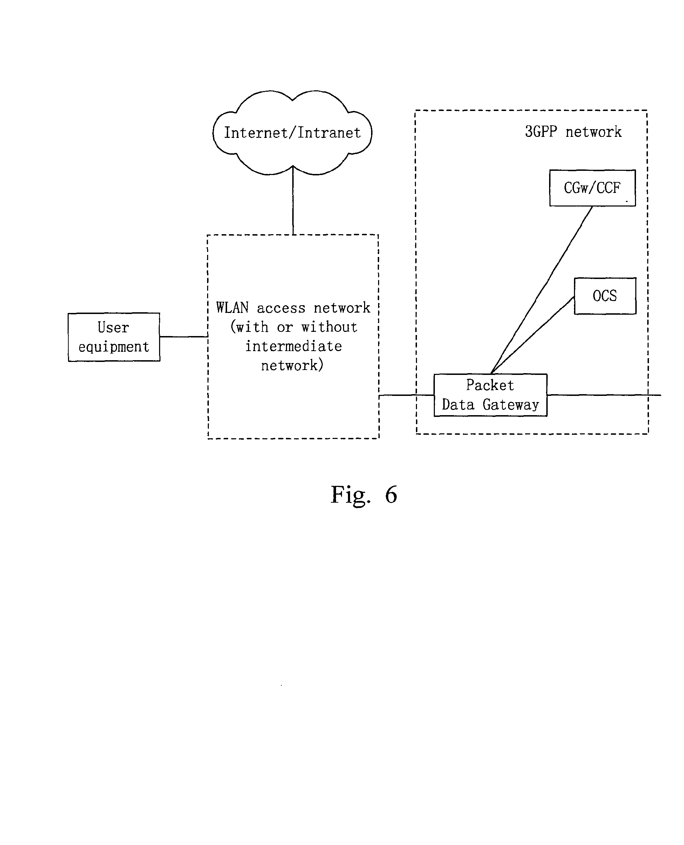

The charging service unit as a functional module may be performed in the Packet Data Gateway, which is shown in Figure 6. In this case, the Packet Data Gateway transforms, analyzes and takes statistic to generate the charging information, which is then transmitted to the charging system that comprises the CGw/CCF and the OCS. The charging information is periodically sent to the OCS during the charging procedure in case of the online charging.

All above mentions are only the embodiments of the invention. It is by no means to limit the protection scope of the invention.

## Claims

1. A wireless local area network (WLAN) service system for charging based on user data flow, including a WLAN user equipment, a WLAN access network, and a Packet Data Gateway, wherein the WLAN service system further comprises a charging service unit which generates charging information for user packet data, being connected with the Packet Data Gateway.

2. A WLAN service system according to Claim 1, wherein the charging service unit is connected with a Charging Gateway (CGw)/ Charging Collection Function (CCF) entity and an Online Charging System, respectively.

3. A WLAN service system according to Claim 1, wherein the charging service unit can be an independent entity or a functional module in a network entity.

4. A WLAN service system according to Claim 1, wherein the charging service unit is a charging functional module in a 3GPP AAA server.

5. A WLAN service system according to Claim 1, wherein the charging service unit is a functional module in the Packet Data Gateway.

6. A charging method based on a WLAN service system according to Claim 1, comprising,
a. a Packet Data Gateway taking statistic for a current user data flow to obtain original data flow information, then transmitting the original data flow information to a charging service unit;
b. having received the original data flow information, the charging service unit generating charging information based on the original data flow information, then transmitting the charging information to a charging system.

7. A charging method according to Claim 6, further comprising, the charging service unit transmitting the generated charging information to a Charging Gateway (CGw)/Charging Collection Function (CCF) entity.

8. A charging method according to Claim 6, further comprising, the charging service unit transmitting the generated charging information to an Online Charging System.

9. A charging method according to Claim 6, wherein Step a comprises, the Packet Data Gateway transmits original data flow information of each user to the charging service unit.

10. A charging method according to Claim 6, wherein Step a comprises, the Packet Data Gateway sends one or more than one original data flow information classified by data content to the charging service unit.

11. A charging method according to Claim 6, wherein step of generating charging information in Step b comprises, the charging service unit taking the original data flow information as the charging information directly, or analyzing and taking statistic for the original data flow information, and then taking the analyzed and statistic result as the charging information.

12. A charging method according to Claim 11, wherein step of analyzing and taking statistic for the original data flow information comprises, the charging service unit classifying the original data flow information based on different users, different Packet Data Gateways, different contents or any combination of the three, and then taking statistic for the classified data flow information to generate different kinds of charging information.

13. A charging method according to Claim 6, a DIAMETER or a RADUS protocol is complied with between the packet data gateway and the charging service unit to interact.
